# EUROPEAN PATENT APPLICATION

(11) **EP 2 642 686 A1**
(43) Date of publication of application: **25.09.2013**
(21) Application number: 12250064.8
(22) Date of filing: 20.03.2012
(51) Int. Cl.: H04L 12/10, H04L 12/40, H04M 19/00, H04L 12/24, G06F 1/32

(54) **Control of line power**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A power injection system for delivering electrical power to one or more communications connections (12, 120, 121) in a network, comprises a power control system (8) for controlling the power to be delivered to the connections, the power control system being operable in response to commands delivered to it from a terminal 111 remote from the power injection system itself.

## Description

This invention relates to telecommunications systems, and in particular to the supply of electrical power to equipment in a telecommunications network.

In the public switched telephone network (PSTN) it is known to provide power from the exchange, or from an intermediate point such as a street side cabinet, to a remote point such as customer premises equipment or another intermediate point such as a drop-point, using the telephone wires themselves **-** the traditional twisted wire pair, conventionally using copper wire. In the early development of telephone systems, when mains electricity was still comparatively rare, this allowed provision of service to premises which had no reliable power supply and it is still a useful feature of the PSTN system that communication is possible during a local power failure - in particular so that a call can be made to the emergency services or to electricity suppliers to alert them to the power failure.

There is an increasing demand for electronic communications equipment (e.g. wireless access points, CCTV cameras, machine-to-machine sensors, signage, and monitoring services such as for fire or burglar alarms). It is often necessary to install such equipment in locations where there is no existing power supply. The provision of mains electrical power in new locations can be costly, and there is therefore increasing interest in the capability to provide the electrical power the equipment requires over the same physical connection as that by which the electronic communications equipment transmits and receives data. This enables such services to be provided at locations which have no power supply (mains, generator, or battery). Provision may also be made to use the telecommunications connection to deliver a backup electricity supply for use in the event of failure of the usual power supply.

However, there are constraints regarding the amount of power that can be provided in this way over a wire pair, primarily due to the limitations of the electrical path that a twisted wire pair provides. In particular, the power supply must not interfere with the primary function of the path, to support communications. Moreover, there is a risk of the conductors overheating if an attempt is made to carry large continuous currents for which they were not designed. The maximum power for which such connections were originally intended is sufficient to ring a telephone bell, but this is only required for a short period. It is not generally possible to use the power available over a standard telephone connection to supply more complex telecommunications equipment such as facsimile machines, answering machines, and computers.

The inventors have recognised that, for most of the time, any given wire in the network is carrying much less power than its maximum load, and by arranging for the power required by an individual node to be distributed over the wire pairs forming the communications links to many individual network terminations, the limitations on any individual connection can be overcome. The present invention, and the inventions which are the subject of the present applicant's related patent applications filed on the same date as the present application and entitled "Delivery of Electrical Power" and "Power Distribution for Telecommunications System, all relate to managing the use of multiple wire lines to provide power to remote equipment. This enables underutilised wiring to be used efficiently, and also enables the power supplied to each wire pair to remain within safe limits.

Examples of remotely powered equipment currently contemplated include a specially adapted wireless access point or other type of end terminal, such as a Power-over-Ethernet adaptor. This allows provision of services such as wireless communications, and the provision of electrical power for distribution over Ethernet communications cable networks even at locations where no other form of power is available.

Existing exchange /cabinet located power injectors inject the same amount of electrical power over each twisted wire pair, at a level which is determined by the characteristics of analogue telephone systems. A power line injector has been developed which is capable of adapting its power output over each of a plurality of wire pairs to provide a required current (-60 milliAmps per pair) to a remote equipment within safe voltage limits. The power injector dynamically determines the amount of electrical power to inject into each individual wire pair so as to ensure that the maximum power that can be delivered safely is provided. In addition, providing power in this way enables power monitoring and related services to be provided by the telecommunications service provider.

However, one limitation of equipment powered from the telephone network is that the customer cannot easily control or monitor the power delivery, particularly if the powered device is remote from both the customer and the supplier. For example, a line-powered device such as a monitoring device or an intermediate network node may need to be reset by going through a power-on/power-off cycle. Alternatively, a customer may choose to power down remote equipment when not required, in order to save energy or as a safety precaution, or to monitor equipment for fault conditions.

An additional complication is that, as the power supply is carried over several wire pairs, it may be shared with other users, so simple disconnection at the exchange would need to be arranged in such a way that the other users do not also lose their supply.

Typically line power systems include a management and control interface which allows the voltage or current on a line to be set or monitored. However, this information is not exposed to a customer. Exposing the line power interface to the customer needs to be handled carefully in order to retain security of the network.

In a first aspect, the present invention provides a power injection system for delivering electrical power to one or more communications connections in a network, comprising a power control system for controlling the power to be delivered to the or each connection, the power control system having a communications connection to a network, and operable in response to commands delivered to the control system over the communications connection from a terminal remote from the power injection system. This enables an end customer to have control over the line power present in the line.

Another aspect provides a communications terminal having a communications connection to a network, and configured to generate control commands for transmission by way of the communications connection and network to a power injection system remote from the terminal.

A further aspect provides a method for delivering electrical power to one or more communications connections in a network, wherein a power control system controls and monitors the power to be delivered to each connection, the control system being controlled in response to commands delivered over the communications connection from a terminal remote from the power injection system.

The communications terminal may also generate control commands for transmission by way of the communications connection and network to a power extraction system. The power extraction unit may be located at a point in the network remote from both the power injection system and the communications terminal.

The power injection system need not be co-located with the power injection point, and may control the delivery of power to connections at a plurality of locations in the network.

The monitoring system may also deliver data relating to the operation of the power injection system to the remote terminal. Such an interface could also expose information such as current and voltage, allowing status monitoring or alarms to be generated, or could be used by the communications provider for dynamic charging for electrical power delivered over a telephone network.

An embodiment of the invention will be described by way of example and with reference to the drawings, in which:
Figure 1 depicts a communications network configured to operate a power injection system controlled according to the invention
Figure 2 depicts the functional elements in the telephone exchange of Figure 1 in more detail.
Figure 3 depicts the functional elements in the user terminal of Figure 1 in more detail
Figure 4 is a sequence diagram illustrating the information flows that take place between the various elements depicted in Figure 1.

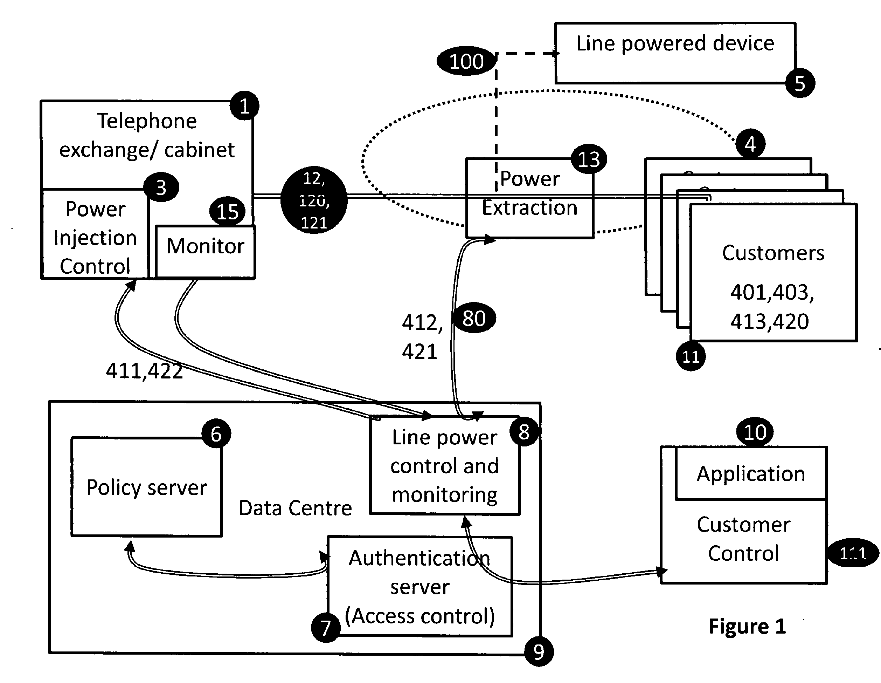

Figure 1 depicts a communications network 4 connecting a number of customer terminals 11 to a network connection point 1. The network connection point 1 may be a telephone exchange or some point intermediate between the exchange and the customer terminations 11. A wire pair 12, 120, 121 etc is connected between each customer terminal 11 and the network connection point 1. Each connection provides the customer's communication link between the switch and the customer termination 11, and for communication purposes is dedicated to that customer alone.

Figure 1 also shows a device 5 which is to be powered by electricity delivered from the network connection point 1. The line-powered device 5 may be co-located with the customer equipment 11, for example a computer modem, or it may be at a remote location, for example for use as an intruder alarm system or for other monitoring purposes. The line powered device 5 may also be part of the network itself, for example a transceiver for conversion between communication media (electrical/wireless/optical). Whilst the wire communications lines 12, 120, 121 may ultimately be connected to different customer premises equipment, 11, power may be extracted from the network using a feed 100 from an intermediate point in the access network 4 such as a "drop point" - the point where the physical routings of separate wires diverge to serve separate premises. The use of multiple wire pairs to a point close to the user's premises enables more power to be delivered to a line powered device 5 than can be supported by a single wire pair 12. Equipment 5 located remotely from the network connection point 1 can thus be turned on and off using a management interface 10 under the control of an authorised user terminal 111.

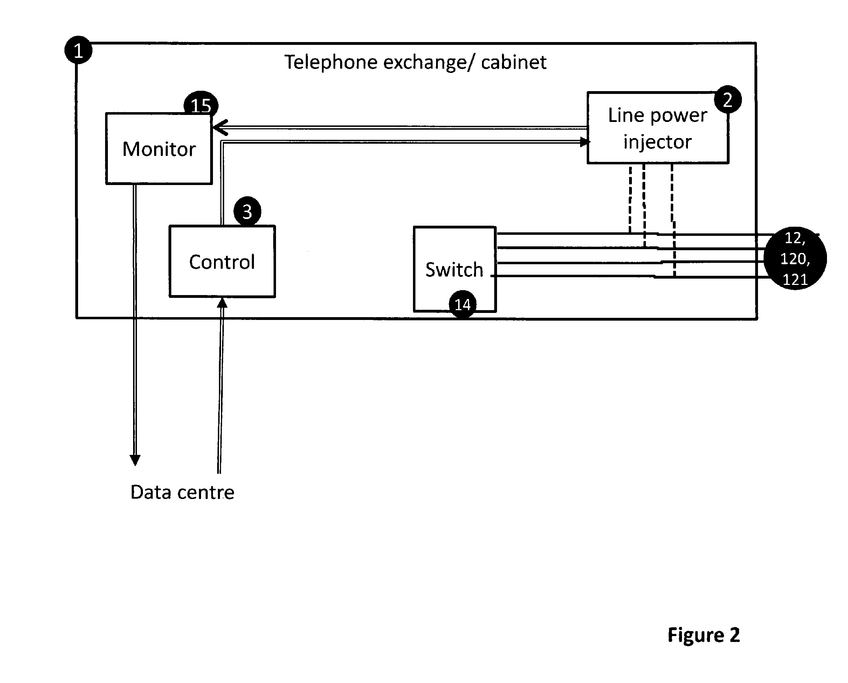

The transmission of power is controlled by a power control server 8 in a data centre 9, which controls the amount of power delivered to each wire connection 12. The power control server interacts with a control function 3 in the network connection point 1 (Figure 2), which controls a power injector 2 to provide the appropriate power to each wire pair 12.

In Figure 1 power feeds are depicted by dashed lines, physical communications connections (which may also include a power feed component) are depicted by solid lines , and control connections are depicted by open lines. It will be understood that the various control functions 9, 10, 111, can be located anywhere in the network, and may use any physical connections and switching capabilities necessary to interact with each other and the injection control 3 and extraction control 13.. The customer control 111 may be delivered from one of the terminals 11 from whose network connections power is extracted, but it may be a remote user.

As shown in Figure 1, the power control server 8 can be controlled and monitored by an application 10, which is able to send commands to the power injection controller 3 in the exchange 1 to set the current or voltage of the injector (2).

Access to the power control server 8 is moderated by policy and authentication servers (6, 7) respectively determining what messages and commands an individual user 11 is allowed to use, and to prove the identity of the user 11.

Figure 2 depicts the power injection functions of the telephone exchange 1. The control function 3 operates a line power injector 2 which delivers electrical power to a plurality of wire pairs 12, 120, 121 connected between the switch 14 in the exchange 1 and an extraction point 13. A monitoring function 15 associated with the power injector may collect data relating to the operation of the power injector 2, and transmit the data to the power control server 8 for delivery to the customer application 10 as required.

The power control server 8 also controls a power extractor 13, which connects the various wire pairs 12, 120, 121 to a power feed to supply electrical power to a device 5. The power extractor 13 can be controlled by the control server 8 to connect and disconnect the supply to the device 5 as required by the user 111. It may be arranged to selectively connect to different line powered devices (e.g. 5) according to the customer's instructions. There may be a dedicated link 80 between the control server 8 and power extractor 13, but the connection may instead be made by a switched connection through the exchange 1.

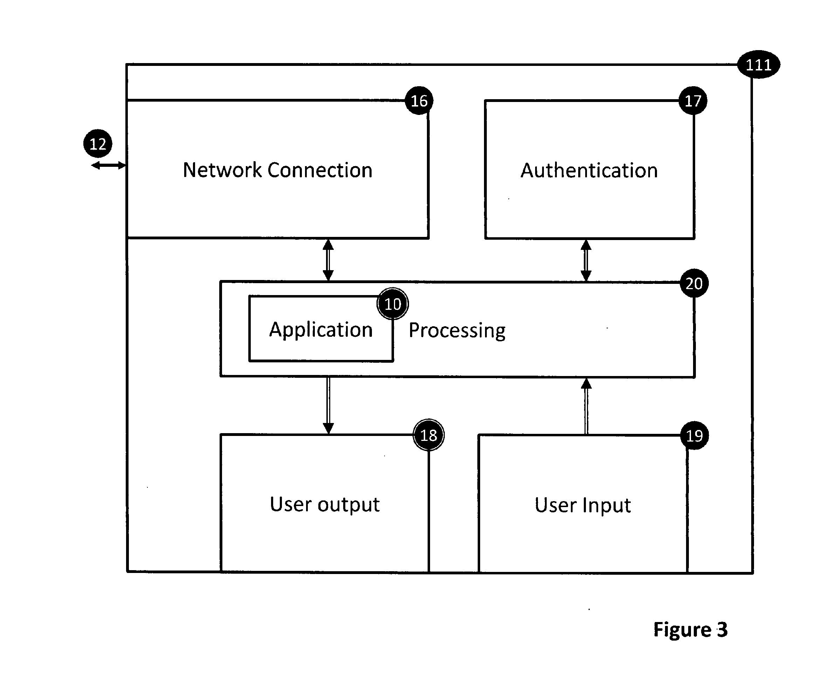

The customer application 10 is a client application running in a customer terminal 111 whose functional elements are depicted in more detail in Figure 3. The terminal 111 includes a network interface 16 for communication with the data centre 9. The terminal also includes an output 18 for providing data to the user, and an input 19 to allow the user to provide data, commands etc to operate the device, or for transmission over the network interface 16. These interfaces could use for example SNMP (Simple Network Management Protocol). There is also a store 17 in which authentication data is maintained to allow interaction with the authentication server 7 in the data centre 9, using the network interface 16. These functions are mediated through a processor 20, whose operation is programmed according to an application 10 installed in the processor 20 either on manufacture, or by subsequent download, or operating remotely through a client/server connection.

The controlling customer server 111 may be located at a termination 11 connected to the network over one of the wire pairs 12 from which power is extracted. Although it will generally be convenient that this is the case, it is not limitative of the scope of the patent claims. In particular, if the line powered device 5 and customer server 111 are located at some distance from each other, or even served by different exchanges 1, the wire pair serving the customer premises 11 may not necessarily pass a suitable point in the network from which power can easily be extracted for the line powered device 5. The network can be configured such that power is extracted from whichever wire pairs 12, 120, 121 it is most convenient to use, typically those passing close by the location of the line powered device. 5

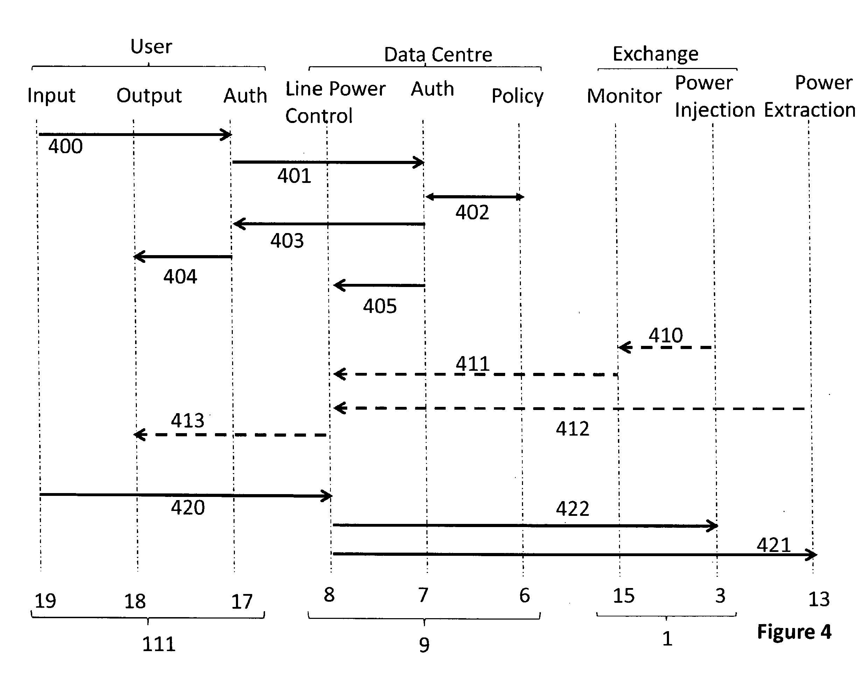

The operation of the invention will now be described with reference to the sequence diagram of Figure 4. Certain network elements are omitted from this diagram for simplicity, in particular the connections and switches 4, 12, 14, 16, over which the various control and data signals are carried, the power injector 2 which is controlled by the power control unit 3, and the processor 20 which mediates the operation of the various elements 17, 18, 19 of the user terminal 11.

In order to ensure the authenticity of the customer controlling the system, the customer 111 is first required to provide authentication credentials to the authentication server 7. In response to a user or application input 19 the processor 20 retrieves the customer's authentication details from the store 17 and transmits them to the data centre 9 where the authentication centre 7 validates them for authenticity and determines, by reference to the data in the policy server 6, what permissions apply to the user 11. The authentication may include one or more challenge and response steps, not depicted in Figure 4.

The authentication server returns a response to the user terminal's authentication system 17 and provides an output 18 to confirm that the authentication process has been successful. The authentication server 17 also instructs the line power server 8 in the data centre 9 that the user 11 is authorised to interact with the line power controller 3.

Once the user has been authenticated, messages can be exchanged between the power control server 8 and the customer application 10, providing information to the customer, and transmitting commands to the data centre, according to the permission levels defined in the policy server 6. The authentication and policy controls ensure that only parties authorised to control the line power are given control. The authentication process 400-405 may be performed as often as is required for network security. It may be performed before every interaction between the user and the power control server, or periodically.

The power injection system 2 in the exchange 1 has an associated monitoring system 15 which transmits data to the data centre 9 (410) from where it can be extracted by the user terminal 11 (step 411). The power extraction system 13 also provides data to the data centre 9 (step 412) from where it can be retrieved by an authorised user 111 (step 413). Each of these steps (410-413) may be operated automatically ("push") or in response to an interrogation command from the element that is to receive the data ("pull").

The data collected may include readings of voltage or current as requested by the customer 111, changes of state of the line power injector 13, for example when a line powered device (5) is connected or disconnected, or when the current or voltage changes, and data derived from these inputs such as tariff-based costs of consumption.

The user terminal 111 is also used to control the line power process in order to deliver or cut power to a line-powered device 5 by transmitting instructions (420) generated at the user input 19 to the power control server 8. The power control server 8 identifies whether the user has the appropriate authority, according to the policy and authentication data 6, 7, to permit the requested operations and then transmits a command 421 to the power extraction system 13 to draw, from one or more wire pairs 12, the power required to operate the line-powered device 5. The power control server 8 also transmits a command 422 to the power control system 3 at the exchange 1, to cause the power injector 2 to deliver, or cease delivering, the required power to the appropriate wire pairs 12.

The monitoring function 410-412 may be used to provide an indication to the end user that such commands have been executed.

It should be noted that power may be extracted from a given wire pair by more than one power extractor 13, for use by different line powered devices.

A power injector may set a voltage level individually on each of a plurality of twisted wire pairs connected to a remote device, depending on known properties of the wire pair such as its internal resistance, or on whether the line is currently in use for signalling, as is described in the applicant's copending application filed on the same date as the present application and entitled "Delivery of Electrical Power". The power injector 2 is dynamically ' responsive to various conditions of each access network line under its control so as to adapt the amount of power output by sensing the presence of signalling on one or more of the communications lines via which power is to be provided. For example, if the total voltage limit is +/-100V and there is no signal present on the pair, a DC voltage of say +/-97.5V can be applied, allowing a margin for fluctuations, and component tolerances. If a DSL signal is present on one pair with peak-to-peak voltage of 30V, then the applied DC voltage can be reduced to +/-82.5V to remain within the total voltage limit.

In addition, the distance from the exchange/cabinet 1 from each equipment 5 being powered using access lines 12 affects the amount of power which can be safely injected by the power injector 2. Also, some types of DSL (digital subscriber loop (e.g. VDSL) reduce the signal level transmitted from a cabinet to avoid excessive cross-talk onto cables which are fed from a more distant signal source (e.g. ADSL delivered from a telephone exchange). Where the power injected is sited in such a cabinet, the DC powering voltage can be set to take account of this reduction.

Whilst the wire communications lines 12 may ultimately be connected to different customer premises 11, power may be extracted from the network at an intermediate point in the access network 4 such as a drop point, to enable broadband connectivity between the customer premises and the drop-point to be supported.

In one example, described in more detail in our co-pending application filed on the same date as the present application and entitled "Power Distribution for Telecommunications System", power carried by the access lines is extracted to power a wireless broadband link, which enables broadband connectivity to be supported in more remote rural areas for a lower infrastructure cost than would be incurred if a dedicated fixed broadband link were to be provided.

## Claims

1. A power injection system for delivering electrical power to one or more communications connections in a network, comprising a power control system for controlling the power to be delivered to the or each connection, the power control system having a communications connection to a network, and operable in response to commands delivered to the control system over the communications connection from a terminal remote from the power injection system.

2. A power injection system according to claim 1, wherein the power control system is arranged to control the delivery of power to connections at a plurality of locations in the network.

3. A power injection system according to claim 1 or claim 2, having a monitoring system for collecting data relating to the operation of the power injection system and delivering data to the remote terminal.

4. A communications terminal having a communications connection to a network, and configured to generate control commands for transmission by way of the communications connection and network to a power injection system remote from the terminal.

5. A communications terminal according to claim 4 having a monitoring system for collecting data from the remote power injection system, relating to the operation of the power injection system.

6. A communications terminal according to claim 4 or claim 5, configured to also generate control commands for transmission by way of the communications connection and network to a power extraction system

7. A communications network comprising a power injection system according to claim 1, claim 2 or claim 3, controlled by a communications terminal according to claim 6, wherein the power extraction unit is located at a point in the network remote from both the power injection system and the communications terminal.

8. A method for delivering electrical power to one or more communications connections in a network, wherein a power control system controls the power to be delivered to the or each connection, the power control system being controlled in response to commands delivered over the communications connection from a terminal remote from the power injection system.

9. A method according to claim 8, wherein the power control system controls the delivery of power to connections at a plurality of locations.

10. A method according to claim 8 or claim 9, wherein data relating to the operation of the power injection system is delivered to the remote terminal.

11. A method according to claim 8, claim 9 or claim 10, wherein control commands are also transmitted from the terminal by way of the communications connection and network to a power extraction system

12. A method according to claim 11, wherein the power extraction unit is located at a point in the network remote from both the power injection system and the communications terminal.
